# FASCICULE DE BREVET EUROPEEN

(11) **EP 0 471 596 B1**
(45) Date de publication et mention de la délivrance du brevet: **20.09.1995**
(21) Numéro de dépôt: 91401924.5
(22) Date de dépôt: 10.07.1991
(51) Int. Cl.: F16J 15/46

(54) **Dispositif d'étanchéité à joint gonflable pour porte ou panneau mobile**
Dichtungsvorrichtung mit aufblasbarer Dichtung für Türen oder mobile Panele
Sealing device with an inflatable seal for doors or movable panel boards

(30) Priorité: 10.07.1990 FR 9008726
(43) Date de publication de la demande: 19.02.1992
(73) Titulaire: LE JOINT FRANCAIS, Société en Nom Collectif, F-75008 Paris (FR)
(72) Inventeur: Colin, Olivier, F-95100 Argenteuil (FR)
(74) Mandataire: Ramey, Daniel

(56) Documents cités:
- DE-U- 7 507 105
- DE-U- 8 805 402
- FR-A- 1 310 018
- FR-A- 2 267 499
- FR-A- 2 338 372
- BAUWIRTSCHAFT no. 5, 27 janvier 1972, page 143, Fundgrube für Bauunternehmen und Baustoffhändler, München, DE

## Description

L'invention concerne un dispositif d'étanchéité à joint gonflable pour porte ou panneau mobile, tel par exemple qu'une porte de voiture de chemin de fer, une porte coulissante ou une porte battante, un panneau vitré, etc..

Les joints gonflables de ce type sont en général fixés sur la périphérie de la porte ou du panneau et comprennent une lèvre d'étanchéité, gonflable ou non, solidaire de la partie tubulaire gonflable du joint et venant s'appliquer sur une surface fixe par rapport à laquelle la porte ou le panneau est déplaçable.

Les parties tubulaires gonflables de ces joints sont au moins partiellement accessibles de l'extérieur, ce qui entraîne des risques de détérioration des joints qui peuvent être en outre l'objet d'actes de vandalisme, visant à les couper ou à les perforer au moyen d'un objet pointu, ou encore à les arracher des portes ou panneaux sur lesquels ils sont montés.

Pour tenter de protéger ces joints et les rendre moins vulnérables aux actes de vandalisme, on a déjà proposé d'y incorporer un tissu de renforcement augmentant leur résistance aux crevaisons et aux déchirures. Cependant, il en résulte également un accroissement relativement important du coût des joints.

On a également proposé dans le document BAUWIRTSCHAFT n° 5, 27 janvier 1972, p. 143,de recouvrir et de protéger le joint gonflable par une paroi pleine qui est solidaire de la porte de ce panneau et qui comporte une fente traversée par une lèvre d'étanchéité indépendante du joint gonflable et sur laquelle ce joint vient s'appuyer quand il est gonflé pour la pousser vers l'extérieur à travers la fente, afin d'assurer l'étanchéité avec une surface fixe. La lèvre d'étanchéité comprend deux rebords latéraux qui sont déformés élastiquement quand la lèvre est poussée vers l'extérieur et qui sont censés rappeler la lèvre vers l'intérieur quand le joint est dégonflé. Il peut cependant arriver, quand le joint est dégonflé, que la lèvre d'étanchéité reste plus ou moins coincée dans la fente, en raison du jeu faible qui existe entre la lèvre d'étanchéité et les bords de la fente, ce qui gêne ensuite la manoeuvre de la porte ou du panneau et risque d'entraîner la destruction ou l'arrachement de la lèvre d'étanchéité.

On connaît également, par le document FR-A- 2 238 372, un joint gonflable pour trappe pivotante, ce joint étant recouvert d'un profilé d'étanchéité poussé vers l'extérieur quand le joint est gonflé. Un ressort spiral est logé à l'intérieur du profilé pour le rappeler en position inactive quand le joint est dégonflé. Il apparaît cependant qu'un tel ressort spiral ne peut être monté que sur une trappe à contour circulaire et qu'il ne pourrait être utilisé sur une porte ou un panneau à contour carré, rectangulaire, ou polygonal en général.

L'invention a notamment pour but d'éviter les inconvénients précités.

Elle a pour objet un dispositif d'étanchéité à joint gonflable pour porte ou panneau mobile, dans lequel le joint gonflable est indémontable et invulnérable à l'égard des tentatives de détérioration de toutes sortes.

Elle a également pour objet un dispositif de ce type, dont le fonctionnement est particulièrement fiable, en assurant une très bonne étanchéité quand le joint est gonflé et en permettant une manoeuvre facile de la porte ou du panneau mobile quand le joint est dégonflé.

Elle a également pour objet un dispositif de ce type qui n'augmente sensiblement pas le coût d'un joint gonflable du type ordinaire.

Elle propose, à cet effet, un dispositif d'étanchéité à joint gonflable pour porte ou panneau mobile, comprenant un joint tubulaire gonflable qui est monté sur la porte ou le panneau, et un patin d'appui sur une surface fixe par rapport à laquelle la porte ou le panneau est déplaçable, le joint gonflable étant recouvert et protégé par une paroi pleine qui est solidaire de la porte ou du panneau et qui comporte une fente ou un passage longitudinal traversé par le patin d'appui, ce dispositif étant caractérisé en ce que le patin est solidaire du joint gonflable et est raccordé à une cloison longitudinale interne du joint gonflable, qui forme un moyen de rappel du patin dans sa position de repos.

Ainsi, selon l'invention, la partie gonflable du joint n'est plus accessible de l'extérieur et est protégée à l'encontre des tentatives de déchirure ou de perforation. Il est donc possible d'utiliser un joint gonflable de type ordinaire, ne comprenant pas de tissu de renforcement.

De plus, le rappel du patin d'appui dans sa position de repos est assuré dans tous les cas par la cloison longitudinale interne du joint gonflable, malgré les frottements éventuels entre le patin d'appui et les bords de la fente qu'il traverse.

Selon un mode de réalisation de l'invention, le joint précité est logé à l'intérieur d'un capot ou d'une gaine fixée à la périphérie de la porte ou du panneau, et ce capot ou cette gaine comporte la fente précitée, dont la largeur est inférieure à celle du joint gonflable, et est très légèrement supérieure à celle du patin d'appui, de sorte que le joint est rendu indémontable et est protégé contre les tentatives d'arrachement.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 est une vue schématique en coupe transversale d'un dispositif d'étanchéité selon l'invention;
la figure 2 est une vue semblable à la figure 1, représentant le même dispositif que la figure 1, mais dans un plan de coupe différent.

Dans l'exemple de réalisation représenté aux dessins, la référence 10 désigne de façon générale une porte ou un panneau qui est mobile par rapport à une surface ou paroi fixe 12 et qui comporte à sa périphérie un joint d'étanchéité gonflable désigné généralement par la référence 14.

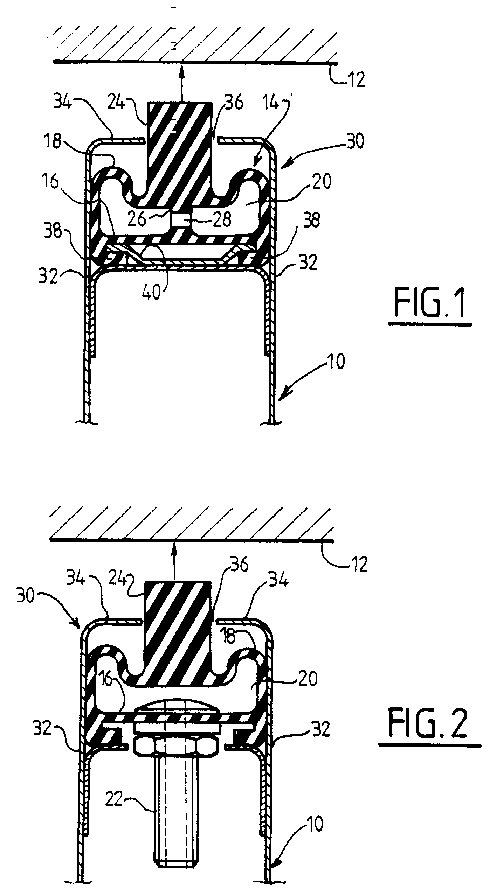

Ce joint d'étanchéité, qui est continu et qui s'étend sur un ou plusieurs côtés de la porte ou du panneau 10, comprend une base 16 de montage sur la périphérie de la porte ou du panneau, cette base 16 ayant par exemple une section transversale en U, et une paroi élastiquement déformable 18 raccordée à la base 16 pour délimiter un volume fermé 20 relié à l'extérieur par un raccord de gonflage 22 représenté en figure 2 et qui est situé de préférence à l'intérieur de la porte ou du panneau 10.

Un patin, bourrelet ou moyen analogue 24 d'appui sur la surface fixe 12 précitée, est porté par la paroi élastiquement déformable 18 et s'étend de façon continue vers l'extérieur du joint, à l'opposé de la base 16.

Dans l'exemple représenté, le patin 24 a une section transversale sensiblement rectangulaire et est plein. En variante, il pourrait avoir d'autres formes en section et être du type gonflable.

On comprend que, quand un fluide sous pression (en général de l'air) est amené dans le volume 20 par le raccord 22, la paroi élastiquement déformable 18 du joint prend une forme bombée convexe vers l'extérieur et pousse le patin 24 en appui sur la surface fixe 12. Il y a alors étanchéité entre la porte 10 et la surface fixe 12, et maintien de la porte 10 en position, en raison de la pression d'appui du patin 24 sur la surface 12.

Lorsqu'on met le volume 20 à l'échappement, la paroi élastiquement déformable 18 reprend sa forme initiale représentée dans les figures 1 et 2, et écarte le patin 24 de la surface 12. Ce retour de la paroi élastiquement déformable 18 dans sa position initiale ou de repos est assuré par au moins une cloison interne 26 telle que celle représentée en figure 1, qui relie la paroi élastiquement déformable 18 à la base 26 et qui comprend des orifices traversants 28 de passage du fluide de gonflage.

Le joint gonflable 14 est monté sur la périphérie de la porte ou du panneau 10 de façon à être d'une part indémontable et d'autre part invulnérable aux tentatives de crevaison ou de déchirure.

Pour cela, il est dans son ensemble monté à l'intérieur d'un capot ou d'une gaine 30, formé par exemple de deux plaques 32 fixées chacune sur une face de la porte ou du panneau et ayant une section en L ou présentant des rebords 34 tournés l'un vers l'autre et délimitant entre eux une fente ou un passage longitudinal 36 dans lequel s'étend avec un jeu faible le patin 24 du joint 14.

Le capot ou la gaine 30 peut avoir en fait n'importe quelle forme ou structure appropriée, dès lors qu'il comporte une paroi pleine de protection et de recouvrement de la partie tubulaire gonflable du joint 14 et une fente ou un passage longitudinal qui est traversé par le patin 24 du joint et qui a une largeur inférieure à celle du joint, pour éviter le démontage ou l'arrachement de ce dernier.

Le volume interne délimité par le capot ou la gaine 30 est suffisant pour ne pas gêner l'expansion du joint résultant de son gonflage et le déplacement du patin 24 vers la surface fixe 12. En d'autres termes, la paroi élastiquement déformable 18 du joint peut se déplacer librement à l'intérieur du capot entre sa position de repos représentée aux dessins et une position de service correspondant à l'état gonflé du joint.

La hauteur ou dimension du patin 24 parallèlement à sa direction de déplacement, peut également être relativement importante et est déterminée en fonction de la distance entre le rebord 34 du capot 30 et la surface fixe 12, dans la position représentée aux figures 1 et 2.

La fixation de la base 16 du joint sur la périphérie de la porte ou du panneau 10 peut également être assurée par des moyens quelconque, pour autant qu'elle soit protégée et non accessible de l'extérieur. Par exemple, comme représenté en figure 1, la base 16 peut comprendre deux rebords orientés l'un vers l'autre et qui engagent une plaque 40 solidaire du châssis ou de l'ossature de la porte ou du panneau.

Le joint peut également être collé sur la périphérie de la porte ou du panneau.

On constate aisément que le joint ainsi logé à l'intérieur du capot ou de la gaine 30 est protégé contre les actes de vandalisme, puisque seul le patin 24 est accessible de l'extérieur. Le jeu très faible entre le patin 24 et les bords de la fente 36 ne permet pas d'atteindre de l'extérieur le joint gonflable 14. La cloison interne 26 du joint 14 permet de ramener le patin 24 dans sa position de repos, malgré les frottements éventuels du patin 24 sur les bords de la fente 36.

## Revendications

1. Dispositif d'étanchéité à joint gonflable pour porte ou panneau mobile, comprenant un joint tubulaire gonflable (14), qui est monté sur la porte ou le panneau (10) et un patin (24) d'appui sur une surface fixe (12) par rapport à laquelle la porte ou le panneau (10) est déplaçable, le joint gonflable (14) étant recouvert et protégé par une paroi pleine (32) qui est solidaire de la porte ou du panneau et qui comporte une fente ou passage longitudinal (36) traversé par le patin (24), caractérisé en ce que le patin (24) est solidaire du joint gonflable (14) et est raccordé à une cloison longitudinale interne (26) du joint gonflable, qui forme moyen de rappel du patin (24) dans sa position de repos.

2. Dispositif selon la revendication 1, caractérisé en ce que le joint (14) est logé à l'intérieur d'un capot ou d'une gaine (30) fixé à la périphérie de la porte ou du panneau et formant la paroi pleine précitée.

3. Dispositif selon la revendication 1 ou 2, caractérisé en ce que ladite fente (36) a une largeur inférieure à celle du joint gonflable (14) et faiblement supérieure à celle du patin (24).

4. Dispositif selon l'une des revendications précédentes, caractérisé en ce que le joint gonflable comprend une base (16) fixée à la périphérie de la porte ou du panneau et une paroi (18) élastiquement déformable sous l'effet de la pression de gonflage, qui porte le patin (24) précité et qui est mobile à l'intérieur du volume délimité par la paroi pleine précitée entre une position de repos écartée de ladite fente (36) et une position de service appliquée sur les bords de cette fente, cette paroi élastiquement déformable (18) étant raccordée à la base (16) du joint gonflable par la cloison longitudinale interne (26) précitée.

5. Dispositif selon une des revendications 1 à 4, caractérisé en ce que ladite cloison interne (26) comporte des trous ou passages traversants (28).

6. Dispositif selon l'une des revendications 1 à 5, caractérisé en ce que ladite paroi pleine (32) est formé de deux plaques à section en L, fixées en regard l'une de l'autre sur l'ossature ou le châssis de la porte du panneau et délimitant entre leurs bords la fente (36) précitée.

## Claims

1. A sealing device with an inflatable gasket for a door or a movable panel, comprising an inflatable tubular gasket (14) which is mounted on the door or the panel (10) and a pad (24) which bears on a fixed surface (12) in relation to which the door or the panel (10) is displaceable, the inflatable gasket (14) being covered and protected by a solid wall (32) which is rigid with the door or panel and which comprises a longitudinal slot or passage (36) traversed by the pad (24), characterised in that the pad (24) is rigid with the inflatable gasket (14) and is connected to an internal longitudinal dividing member (26) extending through the inflatable gasket, which forms a means of restoring the pad (24) to its position of rest.

2. A device according to claim 1, characterised in that the gasket (14) is accommodated within a cap or sheath (30) fixed to the periphery of the door or panel and forming the aforesaid solid wall.

3. A device according to claim 1 or 2, characterised in that the said slot (36) has a width less than that of the inflatable gasket (14) and slightly greater than that of the pad (24).

4. A device according to one of the preceding claims, characterised in that the inflatable gasket comprises a base (16) fixed to the periphery of the door or panel and a wall (18) which is elastically deformable under the effect of the inflation pressure, which supports the aforesaid pad (24) and which is adapted for movement within the space defined by the aforesaid solid wall between a position of rest in which it is apart from the said slot (36) and a working position in which it is applied against the edges of this slot, the said elastically deformable wall (18) being connected to the base (16) of the inflatable gasket by the aforesaid internal longitudinal dividing member (26).

5. A device according to one of claims 1 to 4, characterised in that the said internal dividing member (26) comprises traversing holes or passages (28).

6. A device according to one of claims 1 to 5, characterised in that the said solid wall (32) is formed by two L-section plates fixed opposite each other on the framework or chassis of the door of the panel and and defining the aforesaid slot (36) between their edges.

## Patentansprüche

1. Dichtungsvorrichtung mit aufblasbarer Dichtung für Türen oder verschiebbare Platten, die ein schlauchartiges aufblasbares Verbindungsstück (14) umfaßt, das auf der Tür oder der Platte (10) angebracht ist, und einen Gleitschuh (24) als Widerlager, auf einer festen Oberfläche (12) relativ zu der die Tür oder die Platte (10) verschiebbar ist, wobei das aufblasbare Verbindungsstück (14) durch eine ebene Fläche (32), die einen Spalt oder einen longitudinalen, vom Gleitschuh (24) durchquerten Durchgang (36) umfaßt, verdeckt und geschützt wird, dadurch gekennzeichnet, daß die ebene Fläche mit dem aufblasbaren Verbindungsstück (14) verbunden ist und an eine innere longitudinale Zwischenwand (26) des aufblasbaren Verbindungsstückes angeschlossen ist, die ein Mittel zum Rückführen des Gleitschuhes in seine Ruhestellung bildet.

2. Vorrichtung nach Anspruch 1, dadurch gekennzeichnet, daß sich das Verbindungsstück (14) im Inneren einer Haube oder einer am äußeren Bereich der Türe oder der Platte befestigten Hülle (30) befindet, die die vorgenannte ebene Wand bilden.

3. Vorrichtung nach Anspruch 1 oder 2, dadurch gekennzeichnet, daß der besagte Spalt (36) eine Länge unter derjenigen des aufblasbaren Verbindungsstückes (14) und knapp über derjenigen des Gleitschuhes (24) besitzt.

4. Vorrichtung nach einem der vorherigen Ansprüche, dadurch gekennzeichnet, daß das aufblasbare Verbindungsstück eine am äußeren Bereich der Türe oder der Platte befestigte Basis (16) umfaßt und eine unter der Wirkung des Druckes beim Aufblasen elastisch verformbare Wand (18), die den vorgenannten Gleitschuh (24) trägt und die innerhalb des von der vorgenannten ebenen Wand begrenzten Volumens zwischen einer von dem besagten Spalt (36) entfernten Ruhestellung und einer Arbeitsstellung, bei der sie auf den Rändern dieses Spaltes aufliegt, beweglich ist, wobei diese elastisch verformbare Wand (18) an der Basis (16) des aufblasbaren Anschlußstückes der besagten inneren longitudinalen Zwischenwand (26) angeschlossen ist.

5. Vorrichtung nach einem der Ansprüche 1 bis 4, dadurch gekennzeichnet, daß die besagte innere Zwischenwand (26) Löcher oder transversale Durchlässe (28) umfaßt.

6. Anspruch nach einem der Ansprüche 1 bis 5, dadurch gekennzeichnet, daß die besagte ebene Wand (32) von zwei Platten mit L-förmigem Querschnitt gebildet werden und die einander gegenüber auf einem Rahmen oder der Einfassung der Türe der Platte befestigt sind und zwischen ihren Rändern den vorgenannten Spalt (36) begrenzen.
